# EUROPEAN PATENT SPECIFICATION

(11) **EP 2 327 624 B1**
(45) Date of publication and mention of the grant of the patent: **14.10.2015**
(21) Application number: 10192025.4
(22) Date of filing: 22.11.2010
(51) Int. Cl.: B64C 7/02, B64C 5/02, B64C 7/00, B64C 1/26

(54) **Procedure for obtaining the design of a fairing of an aircraft elevator**
Verfahren zur Erlangung des Aufbaus einer Verkleidung für Flugzeughöhenrudern
Procédé pour l'obtention de la définition d'un carénage pour une gouverne de profondeur d'aéronef

(30) Priority: 27.11.2009 ES 200931078
(43) Date of publication of application: 01.06.2011
(73) Proprietor: Airbus Operations S.L., 28906 Madrid (ES)
(72) Inventor: Ramirez Blanco, Gonzalo, 28026, Madrid (ES); Martinez Valdegrama, Vicente, 28430, Collado Villalba, Madrid (ES)
(74) Representative: Elzaburu Marquez, Alberto

(56) References cited:
- EP-A2- 1 857 360
- US-A1- 2008 164 375

## Description

### SCOPE OF THE INVENTION

This invention refers to a design for the fairing which closes the internal end of the elevator of an aircraft as well as a method for obtaining said design.

### BACKGROUND TO THE INVENTION

The elevator is a stabilising surface of aircraft generally situated at the back end, which controls orientation of the aircraft changing the pitch and angle of attack of the wing or dive of the aircraft. Thus the elevator causes the aircraft to rise or descend. Elevators may be the only control surfaces of the pitch control of the aircraft, in which case they are called mobile elevators or stabilisers or they may be mobile with respect to a fixed or adjustable surface known as a horizontal stabiliser.

The horizontal stabiliser of an aircraft in which the elevator is arranged has the opposite effect to a wing. In general it creates a descending pressure which counteracts the imbalance of the moment due to the fact that the aeroplane's centre of gravity is not situated exactly in the resulting pressure centre. The elevator reduces or increases the descending force created by the back part of the wing. A greater descending force produced by an upward elevator forces the aeroplane elevator to go downwards and the aeroplane nose to go upwards, thus reducing speed. A reduction in descending force in the elevator produced by a downward elevator permits the elevator to rise and the nose to descend and thus the aircraft must move more rapidly in order to produce the necessary elevation. Therefore the adjustment of the elevator determines the balance speed of the aircraft.

The elevator has a relative movement with respect to the aircraft fuselage on one of its ends, specifically on its interior end with respect to the horizontal stabiliser on which it is arranged, the closest to the fuselage, with said end closed by means of a fairing. Between both elements, fuselage and elevator, specifically between the fuselage and the elevator fairing, there should be no contact so that no surface penetrates in the opposite sense during movement of one of these (elevator). Thus there should always be between the fuselage and the elevator fairing, for all possible movements of the elevator, a minimum separation which prevents them from touching and causing damage to either of the two elements.

Document EP-1 857 360 discloses a fairing of an elevator and is considered the closest prior art.

It would therefore be desirable for the fairing of the elevator to ensure that the distance between said fairing and the part or section of the fuselage of the aircraft on which said elevator moves should be as small as possible, in order to reduce to the maximum the aerodynamic losses due to parasitic resistance which is not due to support thereof. Furthermore, this should be maintained for all angles of action of the elevator.

The present designs of the fairing surfaces of an aircraft elevator are made through two intercutting planes, both planes being tangential to the part or section of the fuselage of the aircraft on which said elevator moves. These two planes are intercut for the design of said fairing making a connection radius between both which smoothes said surface. This known design ensures that a distance is maintained throughout the full range of action or movement of the elevator with respect to the aircraft fuselage, avoiding contact between both parts. However, this design does not reduce the aforementioned distance, which has to be maintained between the elevator and the fuselage, therefore, there are high aerodynamic losses on the elevator and as a result on the aircraft.

This invention provides a solution to the aforementioned problems.

### OUTLINE OF THE INVENTION

Thus, the invention develops the design of the fairing which closes the interior end of the elevator of an aircraft in such a way that it ensures that the distance to be maintained between the fairing of the elevator and the part or section of the fuselage on which said plane moves is as reduced as possible for all the surfaces of the aforementioned fairing, as well as for all ranges of action (slew range) of the elevator, in this way reducing aerodynamic losses through parasitic resistance which is not caused by supporting the aircraft.

The elevator is arranged on the horizontal stabiliser of the aircraft in such a way that apart from the rotation of the aforementioned elevator with respect to the surface of the horizontal stabiliser, which we shall call the elevator angle, the horizontal stabiliser of the aircraft also rotates in turn with respect to the fuselage, by means of a given trim angle. Thus, the purpose of the invention is to provide a procedure for obtaining the design of a fairing for the elevator of an aircraft so that said fairing maintains with respect to the section of the fuselage on which it moves, a minimum distance for all ranges of movement of the elevator, that is, both for the elevator angle of the elevator and for the trim angle of the stabiliser.

The procedure followed for obtaining the fairing of the invention is as follows:
a) Firstly a special displacement or offset is made of the surface of the section of the fuselage on which the aforementioned fairing of the elevator is to move.
b) It is initially based on a given position for the trim angle of the horizontal stabiliser which is that in which the trim angle is minimal:
c) A solid is cut which simulates the volume of the elevator;
d) For the aforementioned fixed trim angle of stage b) the elevator angle of the elevator begins to be varied beginning with the minimum elevator angle, cutting the solid for each value of the elevator angle, which simulates the volume of the elevator of stage c);
e) Iterations of stage d) continue to be made until the elevator angle is maximum;
f) It is then verified to ascertain whether for said maximum elevator angle, the trim angle is also maximum;
   f.1) in the event that the trim angle is maximum, stage g) can be undertaken;
   f.2) in the event that the trim angle is not maximum, iterations are carried out varying the aforementioned trim angle and making successive cuts to the solid simulating the volume of the elevator (stages b) and c)) until the aforementioned trim angle reaches maximum;
g) the previous values of the trim angle and the elevator angle are extracted for the offset given the surface of the fuselage section;
h) the surface that remains in the solid which simulates the volume of the elevator is extracted after the successive cuts made to it in the stages d) and f.2).
i) finally the surface obtained in h) is smoothed which as a result gives the fairing design for the optimised elevator.

In this way according to the invention, a surface is obtained for the internal fairing of the elevator of an aircraft which minimises the distance between the elevator and the fuselage for all the positions of the aforementioned plane.

Other characteristics and advantages of this invention shall be described in the detailed description which follows of an illustrative embodiment of its purpose in relation to the figures accompanying this description.

### DESCRIPTION OF THE FIGURES

Figure 1 shows a diagram of the conventional stabilisation components of an aircraft
Figure 2a shows in volume and diagram form the connection of the horizontal stabiliser and its elevator with the fuselage of an aircraft, with a elevator design according to the state of the art.
Figure 2b shows in volume and diagram form the connection of the horizontal stabiliser and its elevator with the fuselage of an aircraft when the plane has made a maximum rotation in one direction
Figure 2c shows in volume and in diagram form the connection of the horizontal stabiliser and its elevator with the fuselage of an aircraft when the elevator has made the maximum rotation in the opposite direction to that of Figure 2b.
Figure 3 shows a cross section diagram of the design of the elevator of an aircraft with respect to fuselage of the same, according to the state of the art.
Figures 4a, 4b, 4c show the spatial rotation of the elevator on the section of aircraft fuselage according to the design of the fairing of invention.
Figures 5a, 5b, 5c show a fairing diagram which closes the interior end of the elevator of an aircraft, according to the design and procedure for obtaining the present invention.
Figure 6 shows a diagram of the stages of the procedure for obtaining the fairing surface for the elevator of this invention.

### DETAILED DESCRIPTION OF THE INVENTION

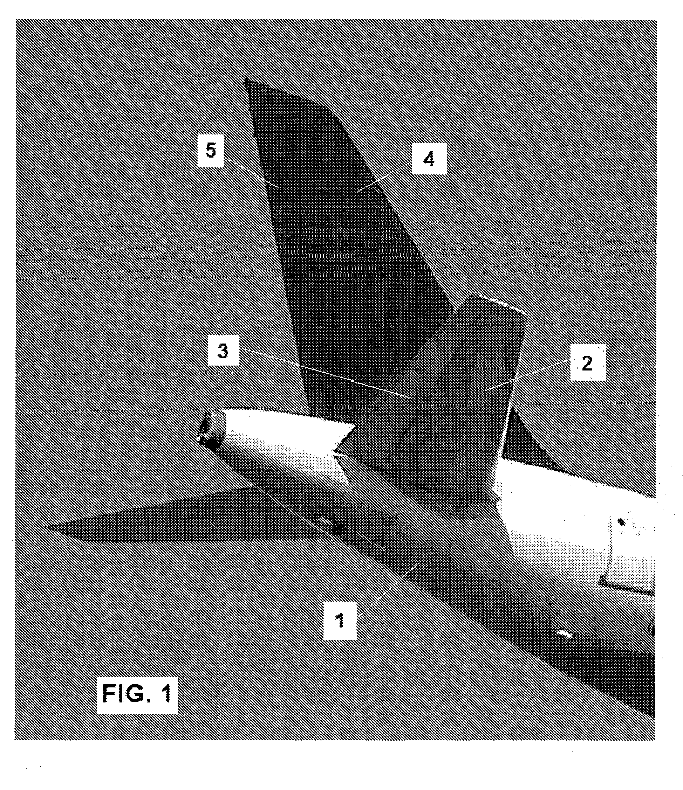

As mentioned, the elevator 3 of an aircraft is a supporting mobile surface attached to the horizontal stabiliser 2 of the aircraft. In a conventional aircraft, there is also a mobile supporting surface, known as a rudder 5 which is attached to the vertical stabiliser 4 (figure 1).

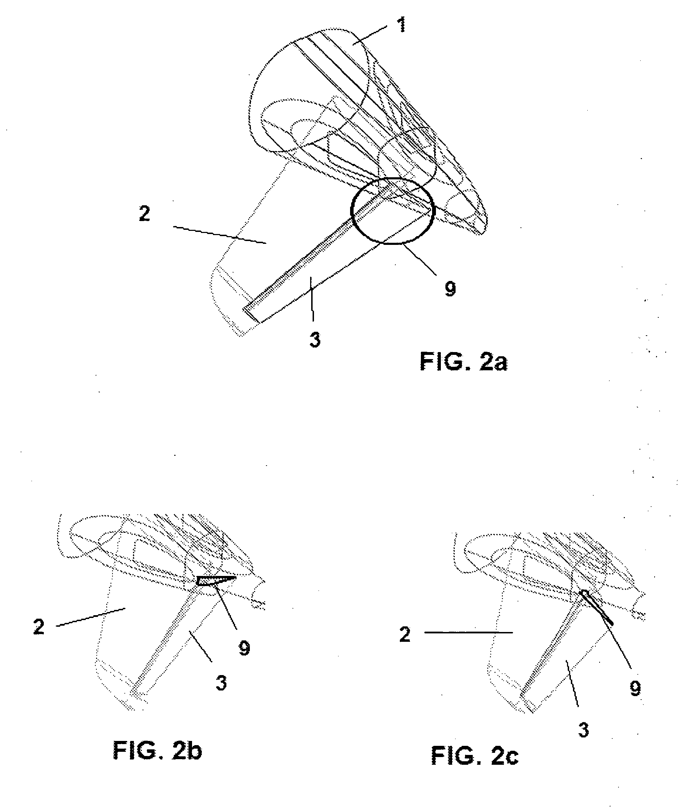

Thus the fairing design 9 which covers the internal end of the elevator 3 according to the state of the art is made in such a way that it is always maintained at least at a distance 6 of separation between the fuselage 1 (specifically between the part of the section of fuselage 1 round which the elevator 3 moves) and the aforementioned fairing 9. This distance 6 has to be maintained in all the action or rotation angles of the elevator 3, marking in Figures 2b and 2c the maximum rotations of said elevator 3 in both directions.

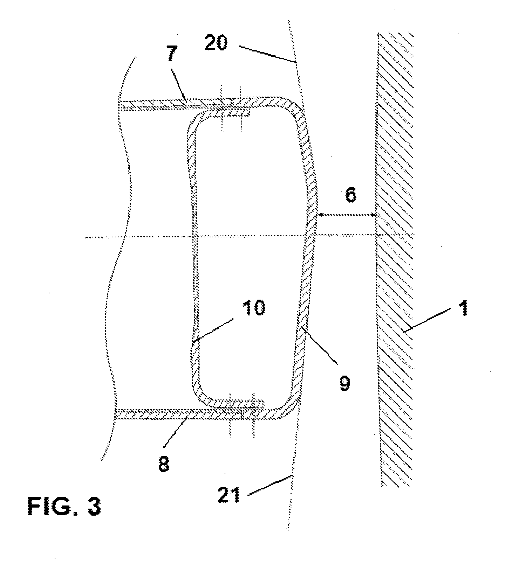

Thus in current designs, the surface of the aforementioned fairing 9 is made through two planes, 20 and 21 which are intercut and through a radius between them as shown in Figure 3. This design option ensures at least one distance 6 in the whole range of action of the elevator 3, between parts, fairing 9 and fuselage 1, which avoids contact between the same. Nevertheless, this distance 6 is not minimised, which produces high aerodynamic losses on the elevator 3 arrangement.

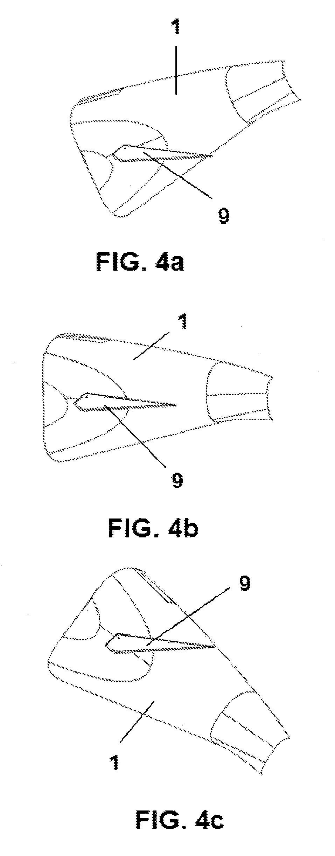

The design of the fairing 9 which closes the interior end of the elevator 3 according to this invention ensures that the distance 6 to be maintained between the fairing 9 of the elevator 3 and the part or section of the fuselage 1 on which it moves, is as minimal as possible throughout the surface of the aforementioned fairing 9, and for all ranges of action of movement (slew range) of the elevator 3 (Figures 4a and 4c) both for the trim angle α of the horizontal stabiliser 2 and for the elevator angle β of the elevator 3, thus reducing the aerodynamic losses due to parasitic resistance not caused by supporting the aircraft.

Thus the purpose of the invention is to provide a fairing design 9 of the elevator 3 of an aircraft such that said fairing 9 maintains, with respect to the section of the fuselage 1 on which it moves, a minimised distance 6, for all the movement ranges of the elevator 3, that is, both for the elevator angle β proper to the elevator 3 and for the trim angle α of the stabiliser 2.

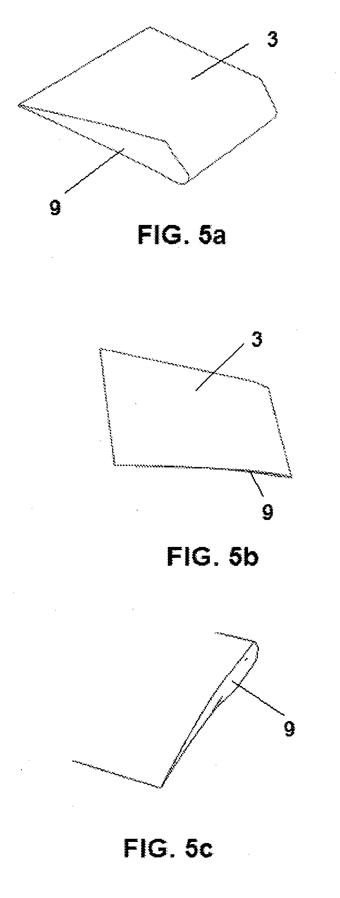

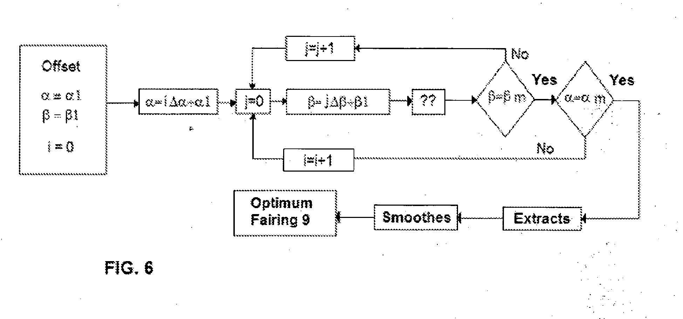

According to another aspect of the invention, a procedure is developed (as shown in the diagram in Figure 6) for obtaining the design of the fairing 9 in the invention, a procedure which comprises the following stages:
a) firstly a spatial displacement or offset of the surface of the fuselage section 1 is made on which the aforementioned fairing 9 of the elevator 3 will move, as appears in figures 4a, 4b and 4c;
b) Firstly it is based on a given position for the trim angle α of the horizontal stabiliser 2 which is that in which the trim angle α is minimum, α₁ (iteration i of trim angle α is equal to zero);
c) A solid is cut which simulates the volume of the elevator 3;
d) For the aforementioned fixed trim angle α₁ of stage b) the elevator angle β of the elevator 3, beginning with the minimum elevator angle β₁ (iteration j of the elevator angle β) cutting for each value of the elevator angle β the solid that simulates the volume of the elevator 3 of stage c);
e) Iterations continue to be made in stage d) until the elevator angle β is maximum, βₘ;
f) It is then verified whether for said maximum elevator angle βₘ; the trim angle α is also maximum αₘ;
   f.1) in the event that the trim angle is maximum, stage g) can be undertaken;
   f.2) in the event that the trim angle is not maximum, iterations are carried out varying the aforementioned trim angle and making successive cuts to the solid simulating the volume of the elevator (stages b) and c)) until the aforementioned trim angle reaches maximum;
g) The previous values of maximum trim angle αₘ and maximum elevator angle βₘ are extracted for the offset given the surface of the fuselage section 1;
h) The surface remaining in the solid which simulates the volume of the elevator 3 is extracted following successive cuts made to the same in stages d) and f.2).
i) Finally, the surface obtained in h) is smoothed which as a result gives the optimised design of fairing 9 for elevator 3 (Figures 5a, 5b, 5c).

In this way according to the invention, a surface is obtained for the internal fairing 9 of the elevator 3 of an aircraft which minimises the distance 6 between the elevator 3 and the fuselage 1, for all the positions of the aforementioned elevator 3.

In the preferred embodiment that we have just described, modifications included in the scope defined in subsequent claims may be introduced.

## Claims

1. Procedure for obtaining the design of a fairing (9) which closes the interior end of an elevator (3) of an aircraft with respect to the section of fuselage (1) with the aforesaid elevator (3) arranged on a horizontal stabiliser (2) of the aircraft, so that the horizontal stabiliser (2) moves with a trim angle (α) with respect to the fuselage section (1) rotating in turn the elevator (3) with an elevator angle (β) with respect to the horizontal stabiliser (2), including the following stages:
a) spatial displacement or offset of the surface of the fuselage section (1) on which said fairing (9) of the elevator (3) is to move, starting from a given position of the trim angle (α) of the horizontal stabiliser (2) ;
b) cut of a solid which simulates the volume of the elevator (3);
c) variation for the aforementioned fixed trim angle (α) of stage a), of the elevator angle (β) of the elevator (3) cutting for each elevator angle (β) the solid which simulates the volume of the elevator (3) of stage b):
d) making of iterations of stage c) up until the elevator angle β is maximum (βₘ)
e) verification of whether for said maximum elevator angle (βₘ) the trim angle (α) is also maximum (αₘ)
f) extraction of maximum trim angle (αₘ) and maximum elevator angle (βₘ) values for the given offset of the surface of the fuselage section (1);
g) extraction and smoothing of the surface obtained, which a result provides the optimised fairing design (9) for a elevator (3).

2. Procedure for obtaining the design of a fairing (9) according to claim 1, **characterised in that** in stage a) the starting position given for the trim angle (α) of the horizontal stabiliser (2) is that in which the trim angle (α) is minimal (α₁)

3. Procedure for obtaining design of a fairing (9) according to either of claims 1 to 2, **characterised in that**, in stage c) the basic position given for the elevator angle (ß) of the elevator (3) is that in which the elevator angle (β) is minimal (β₁).

4. Procedure for obtaining fairing design (9) according to any of claims 1-3 **characterised in that** in stage e) in the event that the trim angle (α) is maximum (αₘ) it is possible to pass directly to stage g).

5. Procedure for obtaining the design of a fairing (9) according to any of claims 1-3 **characterised in that** in stage e) in the event that the trim angle (α) is not maximum (αₘ) iterations are made varying the aforementioned trim angle (α) and making successive cuts to the solid which simulates the volume of the elevator (3) of stages b) and c) until the maximum aforementioned trim angle (α) is obtained (αₘ).

## Patentansprüche

1. Verfahren zur Erlangung der Konstruktion einer Verkleidung (9), die das innere Ende eines Höhenruders (3) eines Flugzeugs in Bezug auf den Abschnitt des Flugzeugrumpfs (1) verschließt, wobei das vorgenannte Höhenruder (3) auf einem Höhenleitwerk (2) des Flugzeugs angeordnet ist, so dass sich das Höhenleitwerk (2) mit einem Trimmwinkel (α) in Bezug auf den Flugzeugrumpfabschnitt (1) bewegt, was wiederum das Höhenruder (3) mit einem Höhenruderwinkel (β) in Bezug auf das Höhenleitwerk (2) dreht, das die folgenden Phasen umfasst:
a) räumliche Verschiebung oder Versatz der Oberfläche des Flugzeugrumpfabschnitts (1), auf dem die Verkleidung (9) des Höhenruders (3) sich bewegen soll, beginnend von einer gegebenen Position des Trimmwinkels (α) des Höhenleitwerks (2);
b) Schnitt eines Festkörpers, der das Volumen des Höhenruders (3) simuliert;
c) Variation für den vorgenannten festen Trimmwinkel (α) der Phase a), des Höhenruderwinkels (β) des Höhenruders (3), wobei für jeden Höhenruderwinkel (β) der Festkörper, der das Volumen des Höhenruders (3) der Phase b) simuliert, geschnitten wird;
d) Durchführen von Iterationen der Phase c), bis der Höhenruderwinkel (β) maximal (βₘ) ist;
e) Überprüfung, ob für den maximalen Höhenruderwinkel (βₘ) der Trimmwinkel (α) ebenfalls maximal (αₘ) ist;
f) Extraktion der maximalen Trimmwinkel- (αₘ) und maximalen Höhenruderwinkel- (βₘ) Werte für den gegebenen Versatz der Oberfläche des Flugzeugrumpfabschnitts (1);
g) Extraktion und Glättung der erhaltenen Oberfläche, was ein Ergebnis der optimierten Verkleidungskonstruktion (9) für ein Höhenruder (3) bereitstellt.

2. Verfahren zur Erlangung der Konstruktion einer Verkleidung (9) nach Anspruch 1, **dadurch gekennzeichnet, dass** in Phase a) die für den Trimmwinkel (α) des Höhenleitwerks (2) gegebene Anfangsposition die ist, in der der Trimmwinkel (α) minimal (α₁) ist.

3. Verfahren zur Erlangung der Konstruktion einer Verkleidung (9) nach Anspruch 1 oder 2, **dadurch gekennzeichnet, dass** in Phase c) die für den Höhenruderwinkel (β) des Höhenruders (3) gegebene Grundposition die ist, in der der Höhenruderwinkel (β) minimal (β₁) ist.

4. Verfahren zur Erlangung der Konstruktion einer Verkleidung (9) nach einem der Ansprüche 1 - 3, **dadurch gekennzeichnet, dass** es möglich ist, in dem Fall, in dem in Phase e) der Trimmwinkel (α) maximal (αₘ) ist, direkt weiter zu Phase g) zu gehen.

5. Verfahren zur Erlangung der Konstruktion einer Verkleidung (9) nach einem der Ansprüche 1 - 3, **dadurch gekennzeichnet, dass** in dem Fall, in dem in Phase e) der Trimmwinkel (α) nicht maximal (αₘ) ist, Iterationen durchgeführt werden, in denen der vorgenannte Trimmwinkel (α) variiert wird und anschließende Schnitte an dem Festkörper gemacht werden, der das Volumen des Höhenruders (3) der Phasen b) und c) simuliert, bis der maximale vorgenannte Trimmwinkel (α) erhalten wird (αₘ).

## Revendications

1. Procédure pour obtenir la conception d'un carénage (9) qui ferme l'extrémité intérieure d'un gouverne de profondeur (3) d'un aéronef par rapport à la section de fuselage (1) avec le gouverne de profondeur précité (3) agencé sur un stabilisateur horizontal (2) de l'aéronef, de sorte que le stabilisateur horizontal (2) se déplace avec un angle d'assiette (α) par rapport à la section de fuselage (1) faisant tourner à son tour le gouverne de profondeur (3) avec un angle de gouverne de profondeur (β) par rapport au stabilisateur horizontal (2), comportant les étapes suivantes :
a) le décalage ou le déplacement spatial de la surface de la section de fuselage (1) sur laquelle ledit carénage (9) du gouverne de profondeur (3) doit être déplacé, à partir d'une position donnée de l'angle d'assiette (α) du stabilisateur horizontal (2) ;
b) le découpage d'un solide qui simule le volume du gouverne de profondeur (3) ;
c) la variation de l'angle d'assiette fixe susmentionné (α) de l'étape a), de l'angle de gouverne de profondeur (β) du gouverne de profondeur (3) découpant pour chaque angle de gouverne de profondeur (β) le solide qui simule le volume du gouverne de profondeur (3) de l'étape b) ;
d) la réalisation d'itérations de l'étape c) jusqu'à ce que l'angle de gouverne de profondeur β soit maximal (βₘ)
e) la vérification du fait si pour ledit angle de gouverne de profondeur maximal (βₘ) l'angle d'assiette (α) est également maximal (αₘ)
f) l'extraction de valeurs d'angle d'assiette maximal (αₘ) et d'angle de gouverne de profondeur maximal (βₘ) pour le décalage donné de la surface de la section de fuselage (1) ;
g) l'extraction et le lissage de la surface obtenue, dont un résultat fournit la conception de carénage optimisée (9) pour un gouverne de profondeur (3).

2. Procédure pour obtenir la conception d'un carénage (9) selon la revendication 1, **caractérisée en ce que** dans l'étape a) la position de départ donnée pour l'angle d'assiette (α) du stabilisateur horizontal (2) est celle dans laquelle l'angle d'assiette (α) est minimal (α₁).

3. Procédure pour obtenir une conception d'un carénage (9) selon l'une des revendications 1 à 2, **caractérisée en ce que**, dans l'étape c) la position de base donnée pour l'angle de gouverne de profondeur (β) du gouverne de profondeur (3) est celle dans laquelle l'angle de gouverne de profondeur (β) est minimal (β₁).

4. Procédure pour obtenir une conception de carénage (9) selon l'une des revendications 1 à 3, **caractérisée en ce que** dans l'étape e) dans le cas où l'angle d'assiette (α) est maximal (αₘ), il est possible de passer directement à l'étape g).

5. Procédure pour obtenir la conception d'un carénage (9) selon l'une des revendications 1 à 3, **caractérisée en ce que** dans l'étape e) dans le cas où l'angle d'assiette (α) n'est pas maximal (αₘ), des itérations sont réalisées en faisant varier l'angle d'assiette susmentionné (α) et en réalisant des découpes successives au solide qui simule le volume du gouverne de profondeur (3) des étapes b) et c) jusqu'à ce que l'angle d'assiette maximal susmentionné (α) soit obtenu (αₘ),
